# EUROPEAN PATENT APPLICATION

(11) **EP 0 595 385 A1**
(43) Date of publication of application: **04.05.1994**
(21) Application number: 93202805.3
(22) Date of filing: 01.10.1993
(51) Int. Cl.: H01M 4/56, H01M 4/20

(54) **Lead-acid battery electrode and method of manufacture**

(30) Priority: 19.10.1992 US 963172
(71) Applicant: GENERAL MOTORS CORPORATION, Detroit Michigan 48202 (US)
(72) Inventor: Witherspoon, Romeo Richard, Shelby Township, Michigan 48315 (US); Poirier, Armand Richard, Sterling Heights, Michigan 48314 (US)
(74) Representative: Jehan, Robert (GB)

(57) **Abstract**

Positive plates (10) are prepared by forming partially oxidised tetrabasic lead sulphate (4 PbOₙ . PbSO₄) having at least a part of the oxide (PbOₙ) portion in the form of alpha-lead dioxide (α - PbO₂), and forming beta-lead dioxide (B-PbO₂). Next the oxidised tetrabasic lead sulphate (OXYTTB) and the beta lead dioxide are intermingled in a wet mixture (30). The wet mixture (30) is applied to an oxidised surface of a lead support substrate (15). Then, it is heated and pressed for a time and at a temperature and under a compressive load sufficient to form an adhered, retained coating (25) of active material (30) on the substrate. The OXYTTB is formed by reaction of tetrabasic lead sulphate with magnesium hydroxide and sodium persulphate. Preferably, beta-lead dioxide is formed by reacting red lead oxide (Pb₃O₄) with nitric acid to provide an oxidation product, at least a major portion of which is beta-PbO₂, and which has a surface area of at least 10 m²/gram.

## Description

This invention relates to positive electrodes of lead-acid batteries and to a method of their manufacture, as specified in the preamble of claim 1.

Automotive type lead-acid batteries have interlaced positive and negative electrodes, also called plates. Each plate consists of special material, known as "active material"_{,} supported on lead-alloy grids. The active material is formed from lead oxide pastes which are processed to a firm, porous form.

In the preparation of plates for a lead-acid battery, a mixture is formed containing oxides of lead, a significant amount of metallic lead, sulphuric acid, water and various other additives. As a result of chemical reaction during mixing, a portion of the mixture is initially converted to lead sulphate (PbSO₄), providing an active material precursor paste which includes lead and its oxides and sulphates.

The precursor paste is applied to conductive lead grids and the freshly-pasted plates are then typically cured to stabilise the precursor material and to enhance the strength. Both positive and negative plates are made by the same basic process except for the selection of additives.

Negative plates are cured for up to three days in a high-humidity warm-air atmosphere to oxidise the free lead present in the plates. Positive plates are cured by steam at a temperature near 100°C for 3 hours. Plates are assembled in a battery and are formed in a two-stage process which involves electrically charging the battery at a relatively high rate for 8 to 9 hours, until the temperature of the battery reaches 66°C to 77°C (150°F to 170°F). The battery is then left to stand for 2 to 3 hours and the charging completed at a lower current density for an additional 14 hours. This procedure normally results in plates which are in the range of 80 to 90% converted to metallic lead negative plates and lead dioxide positive plates. The current process is highly dependent on timing and close control of the curing and charging stages. The charging process is also highly inefficient, requiring of the order of 250% of the calculated energy input to reach full charge.

Therefore, it is desirable to have a new type of active material for a lead-acid battery and a new process for forming plates with the new material.

A positive plate of a lead-acid battery according to the present invention is characterised by the features specified in the characterising portion of claim 1.

The present invention provides a pre-charged positive electrode for a lead-acid battery, and a continuous process for making such a pre-charged electrode without curing and steaming steps. The electrode comprises a binder and an active material comprising at least 50% by weight of at least partially-oxidised tetrabasic lead sulphate (4 PbOₙ . PbSO₄) intermingled with up to about 50% by weight beta-lead dioxide (B-PbO₂), wherein the oxide (PbOₙ) portion of the tetrabasic lead sulphate is present, at least in part, as alpha-lead dioxide (α - PbO₂). Desirably, at least 20% by weight of the tetrabasic lead sulphate is alpha-lead dioxide (α - PbO₂).

Preferably, the alpha-lead dioxide constitutes about 20% to about 50% by weight of the tetrabasic lead sulphate. The beta-lead dioxide (B-PbO₂) has a surface area of at least 10, preferably 12, square metres per gram. Desirably, the B-PbO₂ has a surface area of 10 to about 30 and preferably about 15 to about 20 m²/gram.

In one aspect of the invention, positive plates are prepared by forming partially-oxidised tetrabasic lead sulphate (4 PbOₙ . PbSO₄) having at least a part of the oxide (PbOₙ) portion in the form of alpha-lead dioxide (α - PbO₂), and forming beta-lead dioxide (B-PbO₂). Next the oxidised tetrabasic lead sulphate and the beta-lead dioxide are intermingled with one another in a wet mixture. The wet mixture is applied to the oxidised surface of a lead support substrate. Then, it is heated and pressed for a time and at a temperature and under a compressive load sufficient to form an adhered, retained coating of active material on the substrate.

The step of oxidising tetrabasic lead sulphate (4 PbOn . PbSO₄) achieved at least partial oxidisation of the component PbOₙ (n primarily equal to one) to PbO₂. The at least partially oxidised tetrabasic lead sulphate is also referred to as peroxidised tetrabasic lead sulphate or OXYTTB. The OXYTTB is formed by reaction of tetrabasic lead sulphate (TTB) with magnesium hydroxide and sodium persulphate in an amount and at a temperature sufficient to form OXYTTB having at least 40% by weight of alpha-PbO₂. Alternatively, the OXYTTB is formed by reacting tetrabasic lead sulphate (TTB) with sodium hypochlorite and sodium hydroxide in an amount and at a temperature sufficient to form oxidised tetrabasic lead sulphate (OXYTTB) having at least 40% by weight of alpha-PbO₂ (α-PbO₂).

The term "beta-lead dioxide" refers to an oxidisation product of partially-oxidised lead (i.e. Pb/PbO, Pb2O₄ (OXPb₃O₄)) in which the major portion of the product is lead dioxide in the beta form (B-PbO₂). Lead dioxide (PbO₂) is polymorphous, B-PbO₂ is its tetragonal (rutile-type) form, and α-PbO₂ is its rhombic (columbite-type) form. Preferably, beta-lead dioxide is formed by reacting red lead oxide (Pb₃O₄) with nitric acid in an amount and at a temperature sufficient to provide an oxidation product, at least a major portion of which is beta-PbO₂_{,} and which has the aforesaid surface area of at least 20 m²/gram.

Preferably, before the mixture is applied to the substrate, a thermoplastic resin binder is intermingled with the tetrabasic lead sulphate and with the beta-lead dioxide.

Preferably, the step of heating and pressing is conducted at a temperature of between about 125°C and about 135°C, and at a compressive load of between about 13,789.5 kPa (2,000 psi) and about 24,131.66 kPa (3,500 psi).

Objects, features, and advantages of the invention are a process for forming positive electrodes which are pre-charged for use in lead-acid batteries, a process which is economical, energy-efficient, and suitable for mass-production of electrodes.

These and other objects, features and advantages will become apparent from the following description of the preferred embodiments, appended claims and accompanying drawings, in which:
Figure 1 is a schematic drawing of an electrode for a battery according to the present invention;
Figure 2 is a flow diagram and schematic drawing, showing some of the important steps in producing the electrode of Figure 1; and
Figures 3, 4, and 5 are diagrams of capacity utilisation efficiency as a function of battery cycles.

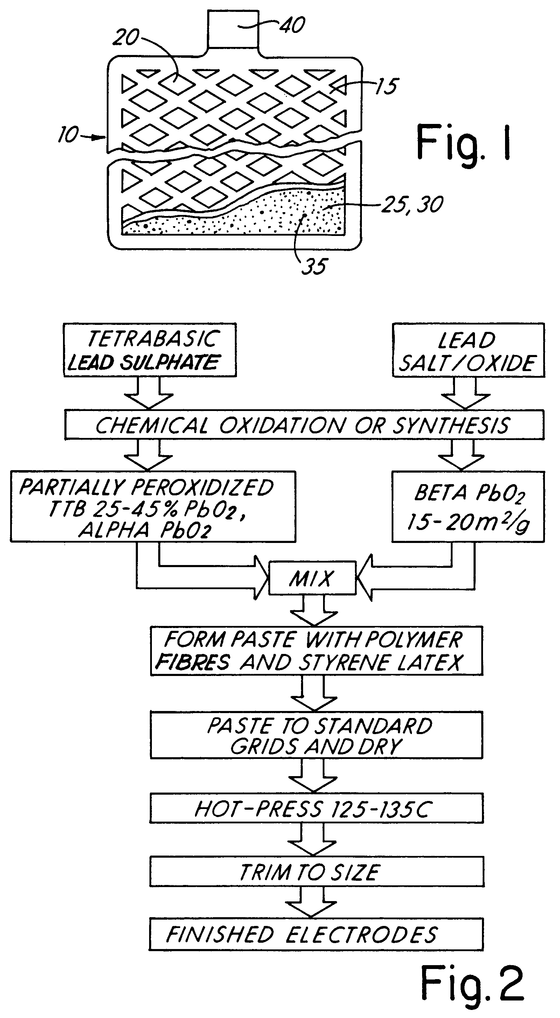

Figure 1 shows a schematic drawing of a portion of an electrode 10 for use in a lead-acid battery. The electrode has a lead-based alloy substrate 15 which is in the form of a grid with recesses 20. The substrate grid 15 has surfaces containing oxides of lead. A coating 25, comprising an active material 30, is applied to the oxidised grid substrate 15.

Several pre-charged positive electrodes 10 were made by the method of the invention using the active material 30 comprising partially-oxidised tetrabasic lead sulphate and various beta-lead oxides having differing surface areas. The following examples show the preparation of the oxidised grid surface 15 to which the active material 30 is applied; the preparation of an electrode 10 by hot-pressing active material 30 to the oxidised grid 15; and the preparation of the preferred oxidised tetrabasic lead sulphate, and beta-lead dioxide components of the active material 30. The various materials and chemical reagents used in the examples are as shown in Table 1.

### PART 1

### Fabrication of Electrode Grid

Electrodes 10 were made using standard production grids 15 available from Delco-Remy, U.S.A.. These grids 15 for positive electrodes 10 are of a 1% tin-0.07% calcium-lead alloy with a thickness of 0.169 mm (0.043"). Electrode grids of 10.7 cm² area were cut from full-sized electrodes for testing. The production electrode grids 15 were subjected to treatments in order to produce an oxide coating on the lead alloy grid 15, that is, a surface of PbO₂. The grids were first cleaned and then oxidised in a 1.35N NaOCl solution containing 3 grams/litre of NaOH for 2.5 minutes at 70°C to 80°C.

In a second alternative, the grids were electrochemically oxidised in a 1M solution of Na₂SO₄ at 0.150 A/cm² for about 1 to about 3 minutes, then washed and dried. A similar electrochemical procedure utilised 37 weight percent sulphuric acid as the electrolyte.

### PART 2

### Electrode Fabrication

The general procedure (Figure 2) for preparing electrodes includes preparing a coating 25 comprising an active material 30 and a binder 35. The binder 35 provides enhanced structural integrity and good adherence and retention of the active material 30 when the active material is applied to the grid 15 and hot-pressed.

The basic steps include first preparing a 3 gram/100 ml H₂O suspension of a wettable polyethylene fibre (binder) in a blender. A suitable wettable polyethylene binder is available from Crown-Zellerbach or Mini-Fibers Inc., U.S.A., under the trade designation of SWP-620. Next, a 9.8 gram sample of active material was prepared and added to a small plastics beaker. Then a sample of the polyethylene suspension weighing 6.6 grams was added to the active material in the beaker. This was followed by an addition of a styrene (binder) latex (50% solids) in the amount of 0.10 grams. A suitable styrene latex is available from Monsanto, U.S.A. under the trade designation #5100. All the ingredients in the beaker were thoroughly mixed together, using a small spatula, and then stored in a small glass bottle.

The combination of ingredients may be prepared and either immediately used or stored. The ingredients were applied to the oxidised metal grid 15 by adding 5 grams of the mixture (active material and binder), with approximately half being added to each side. A thin non-woven polypropylene sheet was used to support each half-sheet to be applied to the grid.

Excess liquid was removed from the mixture with absorbent paper towelling. The oxidised grid having the active material/binder mixture applied thereto, was wet-pressed at 20,684.28 kPa (3000 psi) and dried for 15 minutes at 80°C. Next, it was hot-pressed at about 135°C at 20,684.28 kPa (3000 psi) for about 5 minutes. This essentially completed the formation of the electrode 10. Excess material was trimmed from the electrode and the capacity thereof was calculated from the weight of the active material 30 present in the electrode.

### PART 3

### Preparation of Partially Peroxidised Tetrabasic Lead Sulphate

Two basic methods were used to prepare the partially-oxidised tetrabasic lead sulphate component of the active material. One was based upon the use of sodium persulphate and the other was based on the use of sodium hypochlorite. The step of oxidising tetrabasic lead sulphate (4 PbOₙ . PbSO₄) achieved at least partial oxidation of its PbOₙ portion (n primarily equal to one) to PbO₂. Prior to oxidation, PbOₙ constitutes primarily PbO (n=1), and preferably all the PbOₙ present has n=1. After oxidation, the PbOₙ component comprises a preferred amount of PbO₂ (n=2) in the alpha form primarily as an outer surface layer on the TTB crystals.

### A. Sodium Persulphate Method

300 gram batches of partially-oxidised tetrabasic lead sulphate were prepared by first forming a mixture of 1000 grams water, 51 grams Mg(OH)₂ and 300 grams tetrabasic lead sulphate, and heating the mixture to 85°C in a beaker with rapid stirring. Next, 150 grams of sodium persulphate were gradually added to the mixture in the beaker, whilst the temperature of the mixture rose to a range of between 95°C to 97°C. This was maintained for approximately 20 minutes. Then, the pH value of the mixture was adjusted to a range of 4 to 5 with sulphuric acid to dissolve any excess magnesium hydroxide. Excess liquid was decanted and the material in the beaker was vacuum-washed several times to an essentially sulphate-free condition.

Finally, the mixture was dried at about 150°C for 30 minutes and an analysis was conducted to determine the lead dioxide content of the product. It was determined that the partially-oxidised tetrabasic lead sulphate product (OXYTTB) had a content of about 40 to about 50% by weight PbO₂ (lead dioxide) and demonstrated a resistance of 0.02 to 0.05 ohm-cm.

### B. Sodium Hypochlorite Method

In this method, partially-oxidised tetrabasic lead sulphate was prepared by first adding 1000 ml of commercial grade 10 weight percent sodium hypochlorite and 4.5 grams of sodium hydroxide to a beaker, and heating the resulting solution to about 70°C, whilst stirring it rapidly. Next, 300 grams of tetrabasic lead sulphate were added to the hot mixture whilst stirring continued, and the reaction temperature rose to about 90°C. The reaction temperature was maintained in a range of about 85°C to about 90°C for about 20 to about 30 minutes, by the addition of cold water or ice to the reaction mixture. The reaction mixture was then permitted to settle and excess liquid was decanted, followed by the addition of sulphuric acid sufficient to decrease the pH value of the mixture to about 4. The product was then washed thoroughly to an essentially chloride-free condition. The product was dried, measured, and assayed as described above. The OXYTTB product of this method demonstrated a resistance of 0.01 to 0.03 ohm-cm, and had a lead dioxide content of about 35 to about 40%.

**TABLE 1**

| Materials | |
|---|---|
| Reagent or Material | Source |
| Sodium persulphate (Na₂S₂O₈) | FMC, U.S.A. |
| Sodium hypochlorite (NaOCl) | Industrial bleach |
| Sodium hydroxide reagent | J.T. Baker, U.S.A. |
| Magnesium hydroxide | EM Science, U.S.A. |
| Sulphuric acid | J.T. Baker, U.S.A. |
| Sodium sulphate | J.T. Baker, U.S.A. |
| "Delox" lead oxide (PbO) | Delco-Remy standard |
| Tetrabasic lead sulphate (TTB) | Eagle Picher, U.S.A. |
| OXYTTB = peroxidised TTB | Part 3 and Examples |
| Red lead oxide (Pb₃O₄) | J.T. Baker, U.S.A. |
| Oxidised red lead oxide(OXYPb₃O₄) | Part 4 and Examples |
| SWP-620 polyethylene fibre | Crown-Zellerbach Mini-Fibers Inc., U.S.A., |
| #5100 styrene/acrylic latex | Monsanto Chem. Co., U.S.A., |
| Nitric acid (HNO₃) | J.T. Baker, U.S.A., |
| Lead dioxide (PbO₂) | Eagle Picher, U.S.A., |
| Medium, fast, very fast cure grades (PbO₂) | Eagle Picher, U.S.A., |
| OXYPbO = oxidised PbO | Part 4 and Examples |

### PART 4

### Preparation of Beta-Lead Dioxide from Lead Oxide Precursors

### A. Beta-Lead Dioxide from Oxidised Pb₃O₄ in Nitric Acid

As stated earlier, the term "beta-lead dioxide" refers to an oxidisation product of partially-oxidised lead (i.e. Pb/PbO, Pb₂O₄ (OXPb₃O₄)) in which the major portion of the product is lead dioxide in the beta form (B-PbO₂). The product may also include residual PbO which stabilises the product. Three basic methods were used to prepare the beta-PbO₂. One relied on the use of nitric acid at reaction conditions which included high, medium, and low temperatures and various quantities of nitric acid.

A preferred form of beta-lead dioxide was prepared using nitric acid which produced beta-lead dioxide having a preferred surface area in the range of 15 to 25 m²/gram. The preferred surface area was achieved after a few trials which are instructive regarding the concentration and temperature effects on surface area. In a first trial, 200 grams of red lead oxide (Pb₃O₄) were mixed with 400 grams of water and 125 grams of concentrated nitric acid, whilst rapidly stirring the mixture for about 20 minutes at a temperature of about 100°C. The red lead oxide had a surface area in the range of 1.00 to 1.50 m²/gram. The product was washed nitrate-free and dried. The product was assayed and found to have a PbO₂ content of 96.5%, a resistance less than 0.001 ohm-cm and a BET surface area of only 0.80 m²/gram.

The same process was again attempted at 80°C and 50°C. In each case, the PbO₂ content was somewhat less, the resistance was about the same, and the surface areas were, respectively, 3.8 m²/gram at 80°C and 39 m²/gram at 50°C.

Based on these results, an optimal method was developed in which only 110 grams of nitric acid were used for each 200 grams of red lead oxide, and the temperature was maintained at about 100°C. The product was brown in colour, demonstrated 86% PbO₂, a resistance of 0.0015 ohm-cm, and a surface area of about 22 m²/gram. This surface area is within a desired range of about 10 to about 30 m²/gram, and close to the most preferred range of about 15 to about 20 m²/gram.

### B. Beta-Lead Dioxide from Partially-Oxidised Lead Oxides

Another method was based upon either forming partially- or fully-oxidised leady oxide (PbO/Pb, obtained from Delco-Remy, U.S.A.) or forming partially- or fully-oxidised red lead oxide (Pb₃O₄). By the use of a sodium persulphate process as described in Part 3, subpart A, it was found that levels of oxidation ranged from a low of 5% to above 90%, depending on the amount of sodium persulphate used.

Preferably, to obtain a fully-oxidised material, sodium persulphate is used in an amount about equal to, or slightly in excess of, the amount of the starting oxide.

### C. Thermal Treatment of Oxidised Pb₃O₄

In a third method, beta-lead dioxide was formed from fully-oxidised red lead oxide (Pb₃O₄) by a thermal treatment. In this alternative, an active form of lead dioxide was obtained by first preparing lead dioxide (PbO₂) and then by heating it at a temperature of about 295°C to about 300°C in air for about 30 minutes, in order to convert the alpha form to the higher temperature-stable beta form. This third alternative was found to be the least effective.

### Example 1

A partially-oxidised tetrabasic lead sulphate having about 25 to about 30% by weight alpha-lead dioxide (α-PbO₂) was formed in accordance with the sodium persulphate method described in subpart A of Part 3 above. Beta-lead dioxide (B-PbO₂), obtained from Eagle Picher Company, U.S.A., was beta-lead dioxide with a surface area of 12 m²/gram (Fast Cure, FC; Eagle Picher Company, U.S.A.). This was in the preferred range of about 10 to about 15 m²/gram. The partially-oxidised tetrabasic lead sulphate (OXYTTB) was combined with the beta-lead dioxide and a binder in the following proportions: 70% OXYTTB, 28% beta-lead dioxide, and 2% binder. A wet mixture of these components was applied by hot-pressing to an oxidised electrode grid. The electrode was tested as described below and demonstrated about 5 to about 7% utilisation. The percentage utilisation is determined by comparing the delivered Ah (ampere-hour) with the theoretically available Ah.

It is thought that the lead oxide composition of the wet mixture (paste) remains essentially unchanged after it is applied to the grid, dried, and hot-pressed. The paste of a typical known process has a composition which is changed after it is applied, cured, and steamed. Thus, the invention provides a unique paste (active material precursor) which has a composition essentially the same as the unique active material of the invention.

### Comparative Example A

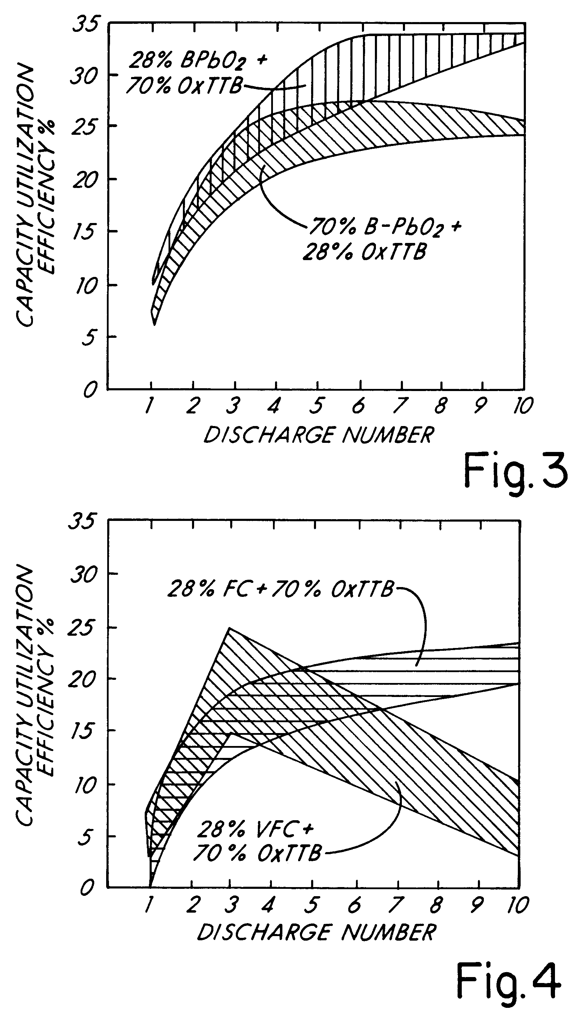

Method of Example 1 was used except that the electrode composition was changed to 70% beta-lead dioxide, and 28% of the partially-oxidised tetrabasic lead sulphate. This produced lower initial utilisation and a lower maximum utilisation with continued cycling, than did the electrodes of Example 1. (See Figure 3).

### Example 2

The method of Example 1 was followed except that the electrodes were formed with beta-lead dioxide PbO₂ having a surface area of 27 m²/gram (Very Fast Cure, VFC); and the grids were vapour-blasted rather than chemically oxidised. This produced an electrode with an initial capacity of about 5% utilisation. The cycling ability extended considerably to about 10 cycles before the capacity dropped below 10% utilisation.

### Example 3

The method of Example 2 was used except that beta-PbO₂ having a surface area of about 12 m²/gram (Fast Cure, FC) was used in forming the electrode. The initial capacities fell within the same performance band of about 1 to about 7%, but the cycling properties were greatly improved, as can be seen from Figure 4 where the electrodes formed from two types of beta-PbO₂ are compared (12 m²/g FC versus 27 m²/g VFC). The test procedures used to evaluate performance are as follows.

Since the electrodes are intended for a pre-charged battery in which there is initial capacity without charging, the initial test always included a discharge at 0.20 A/cm². The discharge was carried out in sulphuric acid, with a specific gravity of 1.280, against two fully-charged production lead negative electrodes, each with an area four times that of the positive electrode. Test cells were either of an open beaker type or of a more conventional sandwich design. The discharge data was monitored by a computer program which recorded the discharge time to a cut-off voltage of 1.00V for the complete cell, as well as the potential of the positive electrode versus a mercurous sulphate reference electrode. After each discharge, the test cells were recharged at constant current for 14 hours so as to input the theoretical capacity. In a few cases, the discharge current density was increased to 0.40 A/cm², which more closely approximates the current density used in starting automotive vehicles.

In comparing the electrodes of Examples 2 and 3, it can be seen that the electrodes of Example 2 reach a peak value at three cycles, whereas the electrodes of Example 3 continue to improve in capacity past ten cycles, and some electrodes were tested out to thirty cycles with good retention of properties, (see Figure 4). It is apparent from this data that the combination of a moderate surface area form of beta-PbO₂, along with the stabilising influence of the partially-oxidised tetrabasic lead sulphate, is necessary for good cycling properties.

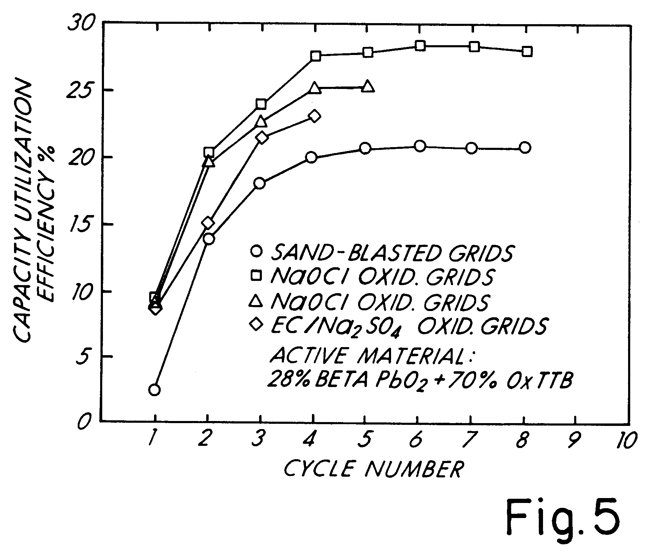

Tests were also conducted to determine the effect of various grid treatments. Some grids were first vapour-blasted and subsequently treated in sodium hypochlorite (1.35N) for a period of 16 hours, washed, and dried. Other electrodes were prepared by using the previously described electrochemical and chemical treatments of Part 1. Figure 5 shows the effects of grid treatments on electrodes of fixed compositions, (70% partially-oxidised tetrabasic lead sulphate by the sodium hypochlorite method (subpart A of Part 3); and 28% beta-PbO₂ from Pb₃O₄ by the nitric acid method (Part 4)). As can be seen from the data in Figure 5, there is an improvement of at least 5% when the grid is oxidised to achieve a thin layer of PbO₂ on the grid surface before application of the active material.

Advantageously, the invention provides electrodes which deliver 10% utilisation on the first discharge, and good cycling capability through the use of a PbO₂ coating on the grid; and an active material consisting of a relatively high surface area beta-PbO₂ as a minor component, and a partially-oxidised tetrabasic lead sulphate as the major component. A polyethylene fibre/styrene particle binder which constitutes about 2% by weight of the mixture of active material and binder, was found to produce acceptable results. These pre-charged electrodes are useful in automotive applications as they will deliver material utilisation of 10% and current densities in the 0.20 to 0.40 A/cm², and have good cycling properties under accelerated test conditions.

The embodiments of the invention in which an exclusive property or privilege is claimed are defined in the appended claims.

The disclosures in United States patent application No. 963,172 from which this application claims priority, and in the abstract accompanying the application are incorporated herein by reference.

## Claims

1. A positive plate (10) of a lead-acid battery having an active material (30) deposited thereon, characterised in that the active material (30) comprises at least 50% by weight of at least partially-oxidised tetrabasic lead sulphate (4 PbOₙ . PbSO₄) intermingled with up to about 50% by weight beta-lead dioxide (B-PbO₂), wherein the oxide (PbOₙ) portion of the tetrabasic lead sulphate is at least in part composed of alpha-lead dioxide (α - PbO₂).

2. A positive plate (10) according to claim 1, in which the active material (30) comprises about 50% to about 80% by weight of the at least partially-oxidised tetrabasic lead sulphate (4 PbOₙ . PbSO₄) and about 20% to about 50% by weight of the beta-lead dioxide (B-PbO₂), and in which the alpha-lead dioxide (α - PbO₂) constitutes at least 30% by weight of the tetrabasic lead sulphate.

3. A positive plate according to claim 1, in which the alpha-lead dioxide constitutes about 20 to about 50% by weight of the tetrabasic lead sulphate.

4. A positive plate according to claim 1, in which the beta-lead dioxide has a surface area of at least 10 square metres per gram.

5. A positive plate according to claim 1, further comprising a binder (35), intermingled with the active material (30), in an amount sufficient to enhance retention of the intermingled binder (35) and active material (30) on a support substrate (15).

6. A positive plate according to claim 5, in which the binder (35) is a thermoplastic resin.

7. An active material (30) or precursor therefor, for use in a positive plate (10) of a lead-acid battery according to claim 1, which active material (30) comprises at least 50% by weight of at least partially-oxidised tetrabasic lead sulphate (4 PbOₙ . PbSO₄) intermingled with up to about 50% by weight beta-lead dioxide (B-PbO₂), wherein the oxide (PbOₙ) portion of the tetrabasic lead sulphate is at least in part composed of alpha-lead dioxide (α - PbO₂).

8. An active material (30), or precursor therefor, according to claim 7, in which the active material (30) comprises about 50% to about 80% by weight of the at least partially-oxidised tetrabasic lead sulphate (4 PbOₙ . PbSO₄) and about 20% to about 50% by weight of the beta-lead dioxide (B-PbO₂), and in which the alpha-lead dioxide (α - PbO₂) constitutes at least 30% by weight of the tetrabasic lead sulphate.

9. An active material (30), or precursor therefor, according to claim 7, in which the alpha-lead dioxide constitutes about 20 to about 50% by weight of the tetrabasic lead sulphate.

10. An active material (30), or precursor therefor, according to claim 7, in which the beta-lead dioxide has a surface area of at least 10 square metres per gram.

11. A method of making a positive plate (10) for a lead-acid battery according to claim 1, in which the method comprises the steps of:
a) providing at least partially-oxidised tetrabasic lead sulphate (4 PbOₙ . PbSO₄), at least a part of the oxide (PbOₙ) portion of which is in the form of alpha-lead dioxide (α - PbO₂);
b) providing beta-lead dioxide (B-PbO₂);
c) intermingling the tetrabasic lead sulphate and the beta-lead dioxide together in a wet mixture (30);
d) oxidising the surface of a lead support substrate (15);
e) applying the wet mixture (30) of step (c) to the oxidised support substrate (15); and
f) heating and pressing the applied wet mixture (30) for a time and at a temperature and under a compressive load sufficient to form a coating (25) and to retain the coating (25) on the substrate (15).

12. A method according to claim 11, in which the partially-oxidised tetrabasic lead sulphate is formed by reacting tetrabasic lead sulphate with magnesium hydroxide and sodium persulphate.

13. A method according to claim 11, in which the partially-oxidised tetrabasic lead sulphate is formed by reacting tetrabasic lead sulphate with sodium hypochlorite and sodium hydroxide.

14. A method according to claim 11, in which the beta-lead dioxide is formed by reacting an oxide of lead, a major portion of which is red lead oxide (Pb₃O₄), with nitric acid, in an amount and at a temperature sufficient to provide an oxidation product, the major portion of which is beta-PbO₂, and which has a surface area of at least 10 m²/gram.

15. A method according to claim 11, in which, before the step of applying the mixture (30), a thermoplastic resin binder (35) is included in the mixture (30).

16. A method according to claim 11, in which the step of heating and pressing is conducted at a temperature of between about 125°C and about 135°C.

17. A method according to claim 11, in which the step of heating and pressing is conducted at a compressive load of between about 13,789.5 kPa (2,000 psi) and about 24,131.66 kPa (3,500 psi)

18. A method according to claim 11, in which the beta-lead dioxide and the partially-oxidised tetrabasic lead sulphate in the wet mixture (30) are in a proportion to one another of about 20 to about 50 weight percent beta-lead dioxide and about 50 to about 80 weight percent partially-oxidised tetrabasic lead sulphate.
